# EUROPEAN PATENT APPLICATION

(11) **EP 1 391 443 A2**
(43) Date of publication of application: **25.02.2004**
(21) Application number: 03016037.8
(22) Date of filing: 15.07.2003
(51) Int. Cl.: C04B 41/45, C04B 14/20, C04B 26/02, E04B 1/84, C08K 5/17, C08K 3/00, C08K 3/34, C08K 5/00, C08K 5/053, C08L 35/00, C09D 5/02

(54) **Formaldehyde-free coatings and acoustical panel**

(30) Priority: 22.08.2002 US 225892
(71) Applicant: Armstrong World Industries, Inc., Lancaster Pennsylvania 17603 (US)
(72) Inventor: Belmares, Hector, Lancaster, Pennsylvania 17603 (US); Caldwell, Kenneth G., Mountville, Pennsylvania 17554 (US)
(74) Representative: Finck, Dieter, Dr.Ing.

(57) **Abstract**

Disclosed are polymeric or polymerizable non-formaldehyde containing materials including a crosslinked grid and hydrophilic group chemically attached to the crosslinked grid. The composition further includes a compound having a modulus of elasticity of between about 40 GPa and about 250 GPa, such as mica The composition, applied as a back coating on to a panel provides a substantial degree of sag resistance under humid conditions.

## Description

### TECHNICAL FIELD

The present invention relates to the use of certain polymeric or polymerizable formaldehyde-free containing materials to impart sag resistance in panels, including fibrous and acoustical panels.

### BACKGROUND

Acoustical panels are used for a variety of different purposes including in suspended ceilings and generally are comprised of an array of different fibers, binders and fillers. Primarily, fibrous panels are made from mineral wool, perlite cellulosic fibers, fillers and binders.

Panel production utilizes combinations of fibers, fillers, bulking agents, binders, water, surfactants and other additives mixed into a slurry and processed into a panel. Cellulosic fibers are typically in the form of newsprint. Fillers may include expanded perlite, brighteners, such as titanium oxide, and clay. Binders may include starch, latex and reconstituted paper products linked together to create a binding system locking all ingredients into a structural matrix.

Organic binders, such as starch, are often the primary component providing structural adhesion for the panel. Starch is a preferred organic binder because, among other reasons, it is relatively inexpensive. For example, panels containing newsprint, mineral wool and perlite can be bound together economically by starch. Starch imparts both strength and durability to the panel structure, but is susceptible to moisture. Moisture can cause the panel to soften and sag, which is unsightly in a ceiling and can lead to the weakening of the panel.

One method used to counter moisture susceptibility in panels is to back-coat the panels with a melamine-formaldehyde resin based coating with or without a ureaformaldehyde component. When such a formaldehyde resin based coating is exposed to moisture or humidity it tends to expand, which can prevent or inhibit sagging.

Cured melamine-formaldehyde resins contain residual methylol end groups, amines and melamine nitrogen that have a high affinity for water. The resin has a flexible crosslink structure that can expand as the coating picks up moisture by virtue of hydrogen bonding. When a melamine-formaldehyde resin based coating is applied to the back of an acoustical panel, the coating expands in humid conditions. The force created by the expansion of the back of the panel tends to counteracts the sagging force of gravity. However, formaldehyde resins tend to emit formaldehyde, which is a known environmental irritant.

To decrease formaldehyde emissions, the addition of formaldehyde reactive materials, such as urea, have been used to scavenge the free formaldehyde. Unfortunately, such small molecule scavengers end cap the reactive groups of the formaldehyde resin, thus preventing significant levels of crosslinking from occurring. As a result, the characteristic highly crosslinked elastic polymer structure is never formed. The resulting coating is weak and will not expand significantly upon exposure to humidity, and therefore the coated panel's resistance to sag is greatly impaired.

What is needed is a coating capable of counteracting the moisture susceptibility of the panels without emitting an environmental irritant.

### SUMMARY

The present invention comprises a formaldehyde-free coating particularly useful as a backing coating for panels. The coating includes a binder formed from a crosslinked grid and a hydfophilic group chemically attached to the crosslinked grid. The coating further includes a compound having a modulus of elasticity of between about 40 GPa and about 250 Gpa. The compound may include mica. Furthermore, the coating may include fillers such as perlite, brighteners and clay. Additional ingredients may include dispersants, catalysts, surfactants, buffer agents, viscosity modifiers, stabilizers and flow modifiers.

In greater detail, the crosslinked grid may comprise polymers, copolymers, terpolymers and combinations thereof of polyesters saturated and unsaturated, polyurethanes, polycarbonates, alkyds, polyamides, polyacrylates, polymethacrylates, epoxies, dendritic polymers, maleic acid or anhydride polymers and copolymers, ionomers, vinylpyrrolidone polymers and copolymers, poly(vinyl alcohol) polymers and copolymers, polymers and copolymers with hydrophilic grafts, thermosets, carbomer (carbopol) resins and combinations thereof.

The hydrophilic group may comprise positively charged functional groups such as ammonium or quaternary ammonium; neutral hydrophilic functional groups such as amine, urea, amido, saccharide, carboxyl acid, sulfonic add, hydrolyzed nitrile groups such as the ones in polyacrylonitrile (PAN) or alcohol functional group; negatively charged functional groups such as sulfonic anion or carboxyl anion; and combinations thereof.

An additional embodiment includes a coating formed by a binder comprising a polycarboxylic acid crosslinked by a polybasic alcohol and a compound having a modulus of elasticity of between about 40 GPa and about 250 GPa. The polycarboxylic acid may be a carboxylated acrylic polymer. The polybasic alcohol may be a hydroxyalkylated amine such as triethanolamine. The coating may further include fillers and additives.

A further embodiment includes a method of making a liquid coating. The method comprises providing a binder that includes a crosslinked grid having a hydrophilic group, and a compound having a modulus of elasticity of between about 40 GPa and about 250 GPa. The binder and compound are then combined with a liquid carrier to form the liquid coating. Typically, the liquid carrier is water. Additives and fillers may be added to the liquid coating to impart further desired properties.

Additionally, a coated panel is provided comprising a panel having a backing side and an opposing facing side. A coating layer resides in communication with the backing side of the panel. The coating layer includes a binder comprising a crosslinked grid having a chemically bonded hydrophilic group, and a compound having a modulus of elasticity of between about 40 GPa and about 250 GPa. Typically, the coated panel is an acoustical panel. The coating layer renders the panel substantially sag resistant.

A further embodiment, comprises a method of coating a panel. The method includes providing a panel having a facing side and an opposing backing side. A coating is then applied to the backing side of the panel. The coating includes a binder comprising a crosslinked grid having a chemically bonded hydrophilic group, and a compound having a modulus of elasticity of between about 40 GPa and about 250 GPa.

### DRAWINGS

In the drawings:

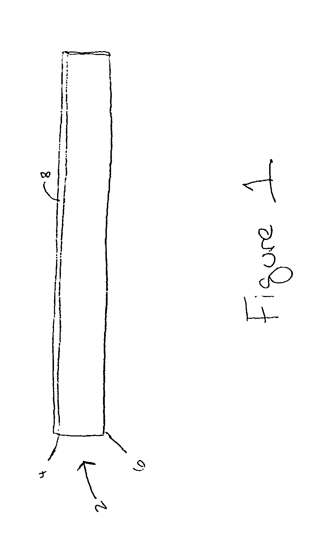

Figure 1 depicts a coated panel having facing and backing sides with a coating according to the invention applied to the backing side.

### DETAILED DESCRIPTION

The present invention includes a formaldehyde-free coating comprising a binder formed from a crosslinked grid and a hydrophilic group chemically attached to the crosslinked grid. The hydrophilic group provides a high affinity for water and the crosslinked grid imparts elastomeric properties that allow for expansion as water is absorbed under humid conditions. The coating composition provides a highly crosslinked structure, with high affinity for water and good elastomeric properties that allow for the coating to swell and expand under high humidity. The force created by the expansion of the coating on the back of the panel counteracts the force of gravity that otherwise tends to make the panel sag.

The coating is described herein as being formaldehyde free in one embodiment. In another embodiment, it is contemplated that a coating may include compositions that are substantially formaldehyde free. Thus, the term "substantially formaldehyde free" is defined as meaning that an incidental or background quantity of formaldehyde (less than 100 ppb) may be present in the coating composition and be within the scope of the invention.

The crosslinked grid is substantially formed upon the curing of the liquid coating. Curing essentially involves the removal of water from the coating suspended in the liquid carrier. While some crosslinking does occur in solution, the majority of crosslinking occurs during curing. The lack of substantial crosslinking in solution enables the liquid coating to have an extended self life or working time. Thus, the term "crosslinked grid" includes those structures partially formed in solution and their components that later will be crosslinked under curing.

More particularly, the crosslinked grid of the coating may comprise polymers, copolymers, terpolymers and combinations thereof of polyesters saturated and unsaturated, polyurethanes, polycarbonates, alkyds, polyamides, polyacrylates, polymethacrylates, epoxies, dendritic polymers, maleic acid or anhydride polymers and copolymers, ionomers, vinylpyrrolidone polymers and copolymers, poly(vinyl alcohol) polymers and copolymers, polymers and copolymers with hydrophilic grafts, thermosets, carbomer (carbopol) resins.

The crosslinked grid polymers may be obtained by either condensation, addition, free radicals, living polymerization, grafting, anionic and cationic polymerization, block copolymerization, cycloaddition, emulsion polymerization, enzyme-catalyzed polymerization, ladder polymerization, photopolymerization, tautomer polymerization, group transfer polymerization or a combination thereof.

The hydrophilic group may comprise positively charged functional groups such as ammonium or quaternary ammonium; neutral hydrophilic functional groups such as amine, amido, saccharide, carboxyl acid, sulfonic acid, hydrolyzed nitrile groups such as the ones in polyacrylonitrile (PAN) or alcohol functional group; negatively charged functional groups such as sulfonic anion or carboxyl anion; and combinations thereof.

The coating composition additionally includes a component having a high modulus of elasticity. The modulus of elasticity may range from about 40 GPa to about 250 GPa. In a further embodiment the modulus of elasticity may range from about 160 GPa to about 250 GPa.

An example of a component having a high modulus of elasticity is mica. Mica is a platelet (leaflet) and adds reinforcement and rigidity to the binder system which results in a stronger coating. In mica, KAl₃Si₃O₁₀ (OH)₂, the aluminosilicate layers are negatively charged, and the positive ions, usually potassium ions, are present between the layers to give the mineral electric neutrality. The electrostatic forces between these positive ions and the negatively charged layers make mica considerably harder than kaolinite and talc. Mica's layered structure permits the mineral to be split into very thin sheets. These layers slide over one another readily.

Mica may be any one of several silicates of varying chemical compositions. For example, mica may be naturally derived from muscovite, phlogopite and pegmatite or mica may be synthetically derived from electrothermally grown crystals. Mica is included in the coating composition to regulate the expansion, elasticity and modulus of the coating under humid conditions. It is believed that the leaflet structure of mica contributes greatly to the binder maintaining the acoustic tiles flat or nearly flat over a wide range of relative humidity and temperature. The coating may contain from about 1% to about 60% by dry weight of mica.

Additional examples of compounds that have a high modulus of elasticity include stainless steel type 304, which has a modulus of elasticity of 195 GPa, titanium carbide, which has a modulus of elasticity of 227 GPa, and Magnesium-partially stabilized zirconia, which has a modulus of elasticity of 203. Further examples include clear fused quartz, aluminum alloy 2014, lead and borosilicate glass.

Fillers may also be included in the coating composition. Suitable filler include expanded perlite, brighteners such as titanium oxide, clay, calcium carbonate, dolomite, sand, barium sulfate, silica, talc, gypsum, wollastonite, calcite, aluminum trihydrate, zinc oxide, zinc sulfate, hollow beads, and mixtures thereof. The coating composition may also contain water, dispersants, organic and mineral fillers, catalysts, pigments, surfactants, buffer agents, viscosity modifiers, stabilizers, defoamers, flow modifiers and combinations thereof.

In a further embodiment, quaternary ammonium compounds or protonated amine compounds, or amine compounds can be introduced apart from hydroxyalkylated amines, as chemical derivatives of acrylic, methacrylic, maleic acid, and other organic polymerizable organic acids. Without restriction, examples of the such compounds are 2-aminoethyl acrylates, methacrylates, and their respective quaternary derivatives.

The solid content of the coating dispersion can be as high as practical for a particular application. For example, a limiting factor regarding the choice and amount of liquid carrier used is the viscosity obtained with the required amount of solids. Thus, spraying is the most sensitive to viscosity, but other methods are less sensitive. The effective range for the solid content of the coating dispersion is from about 15% to about 80%, from about 35% to about 60%, and from about 45% to about 55%.

Typically the coating particles or solids are suspended in an aqueous carrier, which may include an organic solvent. A further embodiment includes a coated panel 2 as illustrated in Figure 1. The coated panel 2 has a backing side 4 and a facing side 6. A coating layer 8 is in communication with or, in other words, applied to the backing side 4 of the coated panel 2. The coating layer 8 counteracts the sagging force of gravity in humid conditions, thus the layer is applied to the backing side 4 of the coated panel 2. The backing side 4 may be the side that is directed to the plenum above the panel in a suspended ceiling tile system. The coated panel 4 may be an acoustical panel for attenuating sound.

An additional embodiment includes a method of coating a panel including the steps of applying the coating composition. The coating may be applied by such methods as roll coating, spraying, curtain coating, extrusion, knife coating and combinations thereof. The effective range for the application rate for this coating is on dry basis from about 2g/sq.ft to about 200g/sq.ft, from about 5g/sq.ft to about 20g/sq.ft, and from 7.5g/sq.ft to about 10g/sq.ft. In an embodiment, the coating is applied to the backside of the acoustic panel. The binder may be in the composition in a range from about 1% to about 80%, from about 10% to about 40%, and from about 15% to about 18% by dry weight.

The coating, once applied, can be thermally cured. For example, the coating may be cured at temperatures ranging from about 350°F to about 700°F and for a duration as short as 15 seconds. Generally, a coating surface temperature of about 390°F is indicative of a full cure. The operation window is wider than for the commercial melamine-formaldehyde coatings now in use.

To minimize the change in overall sag value (S) when going from the 90% relative humidity (RH) cycle to the 35% RH cycle, the effective range for mica filler to increase the elastic modulus per dry weight of coating is from about 1% to about 60%, from about 5% to about 40%, and from about 9% to about 16%.

In a more specific example, the binder may be Acrodur 950 L, available from BASF Corp. of Charlotte, NC, USA. Acrodur 950 L crosslinks at temperatures as low as 180° C, with a recommended temperature of 200°C and is an aqueous solution of a substituted polycarboxylic acid. It contains a polybasic alcohol as the crosslinking agent. The polycarboxylic acid is a carboxylated acrylic polymer and the polybasic alcohol is triethanolamine. The preparation is presented as a 50% solids solution in water with viscosity of 1000-4500 cps, specific gravity of 1.2. Further examples of such compounds can be found in U.S. Patent Nos. 6,071,994; 6,146,746; 6,099,773; and 6,299,936 B1, which are incorporated herein by reference. All such compositions are applicable for the present invention.

Thus, a panel coated with a coating according to the forgoing disclosure exhibits exceptional moisture induce sag resistance while emitting or outgassing little or no formaldehyde.

### EXAMPLES

The following procedures were used to determine the values in the examples.

Formaldehyde emission quantification: To measure formaldehyde emissions, liquid coating samples went through a thermogravimetric analysis procedure, in which the evolved formaldehyde is captured using a 2,4-dinitrophenylhydrazine (DNPH) cartridge. The DNPH cartridge is washed with acetonitrile, diluted to a 5 ml volume, and the 2,4-dinitrophenylhydrazone derivative of formaldehyde is analyzed by liquid chromatography. The thermal gravimetric analysis (TGA) conditions were to heat the sample in air from room temperature to 230°C at a heating rate of 5°C per minute. Results are reported in micro g per mg of coating sample and compared to the control sample results. All tests were done by duplicate and the control was run at the beginning and end of the series.

Overall sag value (S) measurements: The SAG Standard 4-cycle test has the objective to determine the effects of humidity, temperature, and gravity on the deformation characteristics of ceiling materials in an installation position. Six specimens are subjected to the standard test. The samples (2' x 2') or (2' x 4') are placed in a grid in a temperature and humidity controlled room. Four boards are placed in a face down position. One cycle consists of 17-hr at 82°F/90% relative humidity (RH) and 6-hr at 82°F/35% RH. Center point deflection is measured initially and after each segment of the cycle. For acceptable sag performance, the board should not sag more than 0.125" after four cycles. The overall sag values (S) are given at 35% RH for this is the final RH at the end of four cycles.

Overall sag value (S) is given as a negative number while cupping upwards is given as a positive value. The sag values are given in thousandths ofan inch (mils). Thus a sag value of 0.125" is presented as- 125.

Strength tests: Tests followed ASTM C367-98 using the procedure of mid span loading. Modulus of rupture (MOR) and flexural modulus here named modulus of elasticity (MOE) were determined. Results are reported at 90% RH and 82° F.

### EXAMPLE 1

### Demonstration of coating elastic expansion properties with humidity exposure.

To determine directly and comparatively the expansion characteristics of the coating containing Acrodur 950 L, a stainless steel, flat shim with dimensions 6" x 0.5" x 0.002" was coated with a 0.003"-thick coating containing Acrodur 950 L and compared with other identical stainless steel shims coated with 0.002"-thick coating comprising melamine-formaldehyde standard back-coat used in commercial product Fine Fissure Minaboard (Armstrong World Ind., Lancaster, PA, USA). Both coatings were allowed to dry at 200°F for 4 min. and then cured at 450°F for 10 min. The shims were placed in a room at 90% RH at 82°F for 24 hours. With the coatings on the upper part of the shim surface, the shims cupped upwards and the distance between the center of the shim and the flat surface table (geometrically defined as chord) where the shims were placed was measured. The standard melamine-formaldehyde coating gave a chord of 0.5" and the coating containing Acrodur 950 L gave a chord of 5/8". This demonstrates that both coatings expand during humidity exposure causing a cupping of the shim substrate.

Coating composition comprising Acrodur 950 L for the shim test is given in Table 1. The ingredients were added in the order given, from top to bottom, with constant stirring of the mix.

**Table 1.**

| **Coating with Acrodur 950 L.** | | | | | |
|---|---|---|---|---|---|
| **Ingredient** | **Description** | **Manufacturer** | **Address** | **Weight-Wet** | **Weight-dry** |
| ***Water*** | | | | 539.75 | 0.00 |
| ***Clay Slurry*** | EG-44 Slurry | Theile Kaolin Co. | Sandersville, GA | 1145.96 | 802.17 |
| ***Binder*** | Acrodur 950L | BASF Corp. | Charlotte, NC | 401.09 | 200.54 |
| ***Defoamer*** | Tego Foamex 1488 | Tego Chemie | Hopewell, VA | 2.20 | 0.53 |
| TOTAL | | | | 2089 | 1003.25 |
| % solids = 48 Filler / Binder = 4.0 Density lb/gal = 11.3 PVC = Pigment (filler) Volume Concentration = 68.23% | | | | | |

### EXAMPLE 2

### Coating composition comprising Acrodur 950 L applied to an acoustic panel. No mica filler.

The composition of Example 1 was spray-coated on the back of commercial primer-coated acoustic panel Fine-Fissured Minaboard (Armstrong World Ind., Lancaster, PA, USA). A total of 20g/sq.ft wet @ 48% solids was applied. The panel was dried and cured at 450°F for 11 minutes. The sag performance and the results of the strength testing are shown in Table 2 and they are compared with a standard Fine-Fissured Minaboard back-coated with standard melamine-formaldehyde composition thermally cured at the same conditions as the back coating containing Acrodur 950 L. For further comparison, values for a no back-coated Fine-Fissured Minaboard are included. In addition, formaldehyde emissions are also recorded during the thermal curing cycle of the back-coat.

**Table 2 .**

| **Commercial Fine-Fissured Minaboard acoustic panels. Sag performance, strength values, formaldehyde-emission during the thermal curing of Acrodur 950 L back-coating. Comparison includes: a) commercial melamineformaldehyde coating; b) no back-coated acoustic panel.** | | | |
|---|---|---|---|
| **Property value** | **Acrodur 950 L back-coating** | **Melamineformaldehyde back-coating** | **No back-coating at all** |
| ***Overall sag (S), mils*** | *-95* | -110 | -309 |
| ***Overall sag (S), mils, 95% RH*** | *-62* | | |
| ***MOR, psi*** | *69* | *73* | 51 |
| ***MOE, psi*** | 23115 | 24188 | 6803 |
| ***Average emitted formaldehyde, (micro g)* / *(mg ofback-coating)*** | 0 | 1.78 | Not Applicable |

In conclusion, Table 2 shows that back-coatings comprising Acrodur 950 L are at least equivalent to melamine-formaldehyde commercial back-coating in keeping the dimensional stability of acoustic panels. The coating comprising Acrodur 950 L is more potent in sag corrective effect than the one based on melamine-formaldehyde. However, the Acrodur 950 L based coating showed a large change in overall sag value (S) going from 90% RH to 35% RH, S =-62 and S = -95 respectively. To correct this drawback, the next Example 3 solves this for the Acrodur 950 L back-coat by addition of the filler mica. Finally, no formaldehyde was emitted during the curing of Acrodur 950 L-based coating as Table 2 shows.

### EXAMPLE 3

### Acrodur-950-L-comprising back-coatings with addition of mica filler.

Table 3 shows the composition that comprises Acrodur 950 L and mica filler. The composition is almost identical to the one given in Table 1 of Example 1 but now mica filler has been included.

**Table 3.**

| **Coating with Acrodur 950 L and mica filler, filler/binder ratio of 4/1.** | | | | | |
|---|---|---|---|---|---|
| **Ingredient** | **Description** | **Manufacturer** | **Address** | **Weight-Wet** | **Weight-dry** |
| ***Water*** | | | | 611.06 | 0.00 |
| ***Clay Slurry*** | EG-44 Slurry | Theile Kaolin Co. | Sandersville, GA | 1062.69 | 743.89 |
| ***Mica filler*** | Alsibronz 39 | Engelhard | Hartwell, GA | 101.44 | 101.34 |
| ***Binder*** | Acrodur 950L | BASF Corp. | Charlotte, NC | 422.61 | 211.31 |
| ***Defoamer*** | Tego Foamex 1488 | Tego Chemie | Hopewell, VA | 2.20 | 0.53 |
| TOTAL | | | | 2200 | 1057.06 |
| % solids = 48 Filler / Binder = 4.00 Density lb/gal = 11.33 PVC = Pigment (filler) Volume Concentration = 68.06% | | | | | |

The composition was spray-coated on the back of commercial primer-coated acoustic panel Fine-Fissured Minaboard (Armstrong World Ind., Lancaster, PA, USA). A total of 20g/sq.ft wet @ 48% solids were applied. The panel was dried and cured at 450°F for 11 minutes. The sag performance and the results of the strength testing are shown in Table 4. A melamine-formaldehyde commercial coating was used as a comparison. The latter was also cured at the same conditions as the coating containing Acrodur 950 L.

**Table 4.**

| **Commercial Fine-Fissured Minaboard acoustic panels. Sag performance, strength values, formaldehyde-emission during the thermal curing of Acrodur 950 L back-coating containing mica filler. Comparison includes a commercial melamine-formaldehyde coating.** | | |
|---|---|---|
| **Property value** | **Acrodur 950 L back-coating** | **Melamineformaldehyde back-coating** |
| ***Overall sag (S), mils*** | -95 | -110 |
| ***Overall sag (S), mils, at 95% RH*** | -89 | |
| ***MOR, psi*** | *67* | 73 |
| ***MOE, psi*** | 27645 | 24188 |
| ***Average emitted formaldehyde, (micro g)* / *(mg of back-coating)*** | *0* | 1.78 |

In conclusion, the mica filler incorporated into the Acrodur 950 L-based coating imparts near zero change in overall sag value (S) in moving from 90% RH to 35% RH (S = -89 and S = -95 respectively) to the coated acoustic panel. No formaldehyde was emitted during the thermal drying and curing of the 950 L-based coating.

### EXAMPLE 4.

### Effect of the filler/ binder ratio on Acrodur 950 L-based coatings.

For this Example three filler/binder ratios were selected, namely 4/1, 5/1, and 7/1. The 4/1 composition was given in **Example 3 (Table 3)**.

Tables 5 and 6 show the composition for filler/binder ratios of 5/1 and 7/1, respectively.

**Table 5.**

| **Coating with Acrodur 950 L and mica filler with a 5/1 filler/binder ratio.** | | | | | |
|---|---|---|---|---|---|
| **Ingredient** | **Description** | **Manufacturer** | **Address** | **Weight-wet** | **Weight-dry** |
| ***Water*** | | | | 633.77 | 0.00 |
| ***Clay Slurry*** | EG-44 Slurry | Theile Kaolin Co. | Sandersville, GA | 1106.42 | 774.49 |
| ***Mica filler*** | Alsibronz 39 | Engelhard | Hartwell, GA | 105.61 | 105.51 |
| ***Binder*** | Acrodur 950L | BASF Corp. | Charlotte, NC | 352.00 | 176.00 |
| ***Defoamer*** | Tego Foamex 1488 | Tego Chemie | Hopewell, VA | 2.20 | 0.53 |
| TOTAL | | | | 2200.00 | 1056.53 |
| % solids = 48 Filler / Binder = 5.00 Density lb/gal = 11.40 PVC = Pigment (filler) Volume Concentration = 72.69% | | | | | |

**Table 6.**

| **Coating with Acrodur 950 L and mica filler with a 7/1 filler/binder ratio.** | | | | | |
|---|---|---|---|---|---|
| **Ingredient** | **Description** | **Manufacturer** | **Address** | **Weight-wet** | **Weight-dry** |
| ***Water*** | | | | 659.63 | 0.00 |
| ***Clay Slurry*** | EG-44 Slurry | Theile Kaolin Co. | Sandersville, GA | 1162.90 | 814.03 |
| ***Mica filler*** | Alsibronz 39 | Engelhard | Hartwell, GA | 111.00 | 110.89 |
| ***Binder*** | Acrodur 950L | BASF Corp. | Charlotte, NC | 264.26 | 132.13 |
| ***Defoamer*** | Tego Foamex 1488 | Tego Chemie | Hopewell, VA | 2.20 | 0.53 |
| TOTAL | | | | 2200.00 | 1057.58 |
| % solids = 48.1 Filler / Binder = 7.00 Density lb/gal = 11.48 PVC = Pigment (filler) Volume Concentration = 78.82% | | | | | |

Table 7 shows the sag values for the compositions containing mica with filler/binder of 4/1, 5/1, and 7/1. All compositions were spray-coated on the back of commercial primer-coated acoustic panel Fine-Fissured Minaboard (Armstrong World Ind., Lancaster, PA, USA). A total of 20g/sq.ft wet @ 48% solids were applied. All panels were dried and cured at 450°F for 11 minutes.

**Table 7.**

| **Commercial Fine-Fissured Minaboard acoustic panels. Comparison of sag performance values at three different filler/binder ratios for Acrodur 950 L-based coatings containing mica.** | | | |
|---|---|---|---|
| **Property value** | **Filler/binder = 4/1 from Figure 2 composition** | **Filler/binder = 5/1 from Figure 3 composition** | **Filler/binder = 7/1 from Figure 4 composition** |
| ***Overall sag (S), mils*** | -95 | -104 | -124 |
| ***MOR, psi*** | *67* | Not determined | 65 |
| ***MOE, psi*** | 27645 | Not determined | 22873 |
| ***Average emitted formaldehyde, (micro g)* / *(mg ofback-coating)*** | 0 | 0 | 0 |

In conclusion, Table 7 shows that as the filler/binder ratio is increased, the overall sag value (S) becomes greater. This behavior is expected due to the corresponding decreasing amount of elastic binder Acrodur 950 L in the composition as the amount of filler is proportionally increased.

### EXAMPLE 5.

### Effect of curing temperature and curing time on Acrodur 950 L-based coatings containing mica.

The composition of **Example 4 (Table 5)** based on Acrodur 950 L and mica (filler/binder = 5/1) was dried and cured at four different temperatures, namely, 370°F, 410°F, 450°F, and 490°F. Each process temperature was applied at two different drying curing times, namely, 9 minutes and 13 minutes. All compositions were spray-coated on the back of commercial primer-coated acoustic panel Fine-Fissured Minaboard (Armstrong World Ind., Lancaster, PA, USA). A total of 20g/sq.ft wet @ 48% solids were applied. Table 8 shows the sag values obtained.

**Table 8.**

| **Commercial Fine-Fissured Minaboard acoustic panels. Comparison of sag performance values at four different curing temperatures and at two different curing times.** | | | | | | | | |
|---|---|---|---|---|---|---|---|---|
| **Property value** | **370°F, (9min)** | **370°F, (13min)** | **410°F, (9min)** | **410°F, (13min)** | **450° F (9min)** | **450°F (13min)** | **490°F, (9min)** | **490°F, (13min)** |
| ***Overall sag (S), mils*** | -205 | -122 | -101 | -80 | -67 | -104 | -103 | -106 |

In conclusion, Table 8 shows the relationship between crosslinking and sag properties. Low curing temperature combined with a short curing time (i.e. 370°F, 9 minutes) gives a comparatively higher overall sag value (S). As the curing temperature and curing time increase the overall sag (S) goes through a minimum to then increase somewhat at high curing temperature. All this suggests that at low curing temperature and curing time the binder Acrodur 950 L has not yet achieved optimum crosslinking therefore the elastic expansion of the coating when exposed to humidity is not optimum. This effect is seen in the (S) value being relatively high. Then at high curing temperature and curing time the excessive crosslinking decreases the elastic expansion of the coating when exposed to humidity, but the overall sag value (S) is not decreased significantly, possibly because the coating at the higher curing temperature and higher curing time has become more rigid, thus withholding the board from sagging too much.

This curing behavior for the coating of the present invention gives a relatively wide window of operation where sag properties are satisfactory. The operation window is wider than for the commercial melamine-formaldehyde coatings now in use.

### COMPARATIVE EXAMPLE 1.

### Comparative pot life for Acrodur 950 L-based coatings and commercial melamine formaldehyde coating.

A comparative pot life and overall sag performance is given in **Table 5** where viscosity stability and overall sag performance were compared for 7 days at room temperature. The Acrodur 950 L formulation is identical to the one used in Example 4 (Table 5).

**Table 9.**

| **Comparative pot life for melamine-formaldehyde- and Acrodur 950 L- based back coatings. Commercial Fine-Fissured Minaboard acoustic panels used for this test.** | | |
|---|---|---|
| **Pot Life Information Viscosity in cps - Brookfield RVF Viscometer / Spindle # 2 / 10 rpm:** | | |
| | Melamine-Formaldehyde based backcoating | Acrodur 950 L based backcoating |
| Initial | 16 | 3268 |
| 1 Day | 120 | 2944 |
| 2 Day | 1312 | 2248 |
| 4 Day | 5650 | 2110 |
| 7 Day | 6600 | 2040 |

| **Overall Sag Performance - mils:** | | |
|---|---|---|
| | melamine-formaldehyde based backcoating | Acrodur 950 L based backcoating |
| Initial | -107 | -125 |
| 1 Day | -125 | -118 |
| 2 Day | -115 | -114 |
| 4 Day | Viscosity too high to apply | -104 |
| 7 Day | Viscosity too high to apply | -128 |

### COMPARATIVE EXAMPLE 2.

### Comparative cure schedule window for Acrodur 950 L-based coatings and commercial melamine-formaldehyde coating.

A comparative cure schedule window and overall sag performance is given in **Table 10** for an overall sag performance values are -125 mils or less for all the samples. Curing time and temperature were used as the variables. The Acrodur 950 L formulation is identical to the one used in **Example 4 (Table 5)**.

**Table 10**

| **Comparative cure schedule window for melamine-formaldehyde- and Acrodur 950 L-based back coatings. All overall sag performance values are less than -125 mils. Commercial Fine-Fissured Minaboard acoustic panels used for this test.** | | |
|---|---|---|
| Temperature | Melamine-formaldehyde based backcoating | Acrodur 950 L based Backcoating |
| 370 | Significantly exceeds overall sag specification of-125 mils. | 13 min. |
| 410 | 13 min. | 9-13 min. |
| 450 | 9-13 min. | 7-13 min. |
| 490 | Significantly exceeds overall sag specification of-125 mils. | 7-13 min. |

By way of example, the melamine-formaldehyde based backcoatings have a narrow thermal window from about 410°F to about 450°F. At the lower curing temperature range the polymerization is incomplete and at the upper curing temperature range, the crosslinking is too severe and the coating loses the elastic properties needed to keep dimensional stability in the acoustic panel. The Acrodur 950 L based coatings have a wider thermal window as seen above, from 370°F to 490°F keeping the overall sag performance value less than-125 mils.

While Applicants have set forth embodiments as illustrated and described above, it is recognized that variations may be made with respect to disclosed embodiments. Therefore, while the invention has been disclosed in various forms only, it will be obvious to those skilled in the art that many additions, deletions and modifications can be made without departing from the spirit and scope of this invention, and no undue limits should be imposed except as set forth in the following claims.

## Claims

1. A substantially formaldehyde-free coating comprising:
a binder including a crosslinked grid and a hydrophilic group chemically attached to the grid; and
a compound having a modulus of elasticity of between about 40 GPa and about 250 GPa.

2. The coating of claim 1, wherein the crosslinked grid is selected from the group consisting of polyesters saturated and unsaturated, polyurethanes, polycarbonates, alkyds, polyamides, polyacrylates, polymethacrylates, epoxies, dendritic polymers, maleic acid and anhydride polymers and copolymers, ionomers, vinylpyrrolidone polymers and copolymers, poly(vinyl alcohol) polymers and copolymers, polymers and copolymers with hydrophilic grafts, thermosets, carbomer (carbopol) resins and combinations thereof.

3. The coating of claim 1, wherein the hydrophilic group comprises ionic, neutral hydrophilic groups or combinations thereof.

4. The coating of claim 1, wherein the hydrophilic group is selected from the group including ammonium , quaternary ammonium, amine, amido, saccharide, carboxyl acid, sulfonic acid, a hydrolyzed nitrile group, an alcohol functional group, sulfonic anion, carboxyl anion and combinations thereof.

5. The coating of claim 1, wherein the modulus of elasticity of the compound is between about 160 GPa to about 250 GPa.

6. The coating of claim 1, wherein the compound having a modulus of elasticity includes mica.

7. The coating of claim 1, wherein the compound having a modulus of elasticity is selected from the group consisting of stainless steel, titanium carbide, magnesium-partially stabilized zirconia, fused quartz, lead, aluminum alloy, borosilicate glass, and combinations thereof.

8. The coating of claim 1, further comprising a filler.

9. The coating of claim 8, wherein the filler is selected from the group consisting of expanded perlite, brighteners, clay, calcium carbonate, dolomite, sand, barium sulfate, silica, talc, gypsum, wollastonite, calcite, aluminum trihydrate, zinc oxide, zinc sulfate, hollow beads, and mixtures thereof.

10. The coating of claim 1, further including at least one of the components selected from the group consisting ofdispersants, organic fillers, mineral fillers, catalysts, pigments, surfactants, buffer agents, viscosity modifiers, stabilizers, defoamers, flow modifiers and combinations thereof.

11. The coating of claim 1, wherein the coating comprises from about 10% to about 40% by dry weight of the binder.

12. The coating of claim 1, wherein the coating comprises from about 1% to about 60% by dry weight of the mica.

13. The coating of claim 1, wherein the coating comprises from about 5% to about 40% by dry weight of the mica.

14. A coating comprising:
a binder comprising a polycarboxylic acid crosslinked by a polybasic alcohol; and
a compound having a modulus of elasticity of between about 40 GPa and about 250 GPa.

15. The coating of claim 14, wherein the polycarboxylic acid is a carboxylated acrylic. polymer.

16. The coating of a claim 14, wherein the polybasic alcohol is a hydroxyalkylated amine.

17. The coating of claim 14, wherein the polybasic alcohol is triethanolamine.

18. The coating of claim 14, wherein the modulus of elasticity of the compound is between about 160 GPa to about 250 GPa.

19. The coating of claim 14, wherein the compound having a modulus of elasticity includes mica.

20. The coating of claim 14, wherein the compound having a modulus of elasticity is selected from the group consisting of stainless steel, titanium carbide, magnesium-partially stabilized zirconia, fused quartz, lead, aluminum alloy, borosilicate glass, and combinations thereof.

21. The coating of claim 14, further comprising a filler.

22. The coating of claim 21, wherein the filler is selected from the group consisting of expanded perlite, brighteners, clay, calcium carbonate, dolomite, sand, barium sulfate, silica, talc, gypsum, wollastonite, calcite, aluminum trihydrate, zinc oxide, zinc sulfate, hollow beads, and mixtures thereof.

23. The coating of claim 14, further including at least one of the components selected from the group consisting of dispersants, organic fillers, and mineral fillers, catalysts, pigments, surfactants, buffer agents, viscosity modifiers, stabilizers, defoamers, flow modifiers and combinations thereof.

24. The coating of claim 14, wherein the coating comprises from about 1% to 80% by dry weight of the binder.

25. The coating of claim 24, wherein the coating comprises from about 10% to about 40% by dry weight of the binder.

26. The coating of claim 14, wherein the coating comprises from about 1% to about 1% to about 16% by dry weight of the mica.

27. The coating composition of claim 14, wherein the coating comprises from about 5% to about 40% by dry weight of the mica.

28. A method of making a substantially formaldehyde-free liquid coating comprising:
providing a binder having a crosslinked grid and a hydrophilic group chemically attached to the crosslinked grid;
providing a compound having a modulus of elasticity of between about 40 GPa and about 250 GPa; and
combining the binder and compound in a liquid carrier.

29. The method of claim 28, wherein the crosslinked grid is selected from the group consisting of polyesters saturated and unsaturated, polyurethanes, polycarbonates, alkyds, polyamides, polyacrylates, polymethacrylates, epoxies, dendritic polymers, maleic acid and anhydride polymers and copolymers, ionomers, vinylpyrrolidone polymers and copolymers, poly(vinyl alcohol) polymers and copolymers, polymers and copolymers with hydrophilic grafts, thermosets, carbomer (carbopol) resins and combinations thereof.

30. The method of claim 28, wherein the hydrophilic group is selected from the group including ammonium, quaternary ammonium, amine, amido, saccharide, carboxyl acid, sulfonic acid, hydrolyzed nitrile groups, alcohol functional groups, sulfonic anion, carboxyl anion and combinations thereof.

31. The method of claim 28, wherein the modulus of elasticity of the compound is between about 160 GPa to about 250 GPa.

32. The method of claim 28, wherein the compound having a modulus of elasticity includes mica.

33. The method of claim 28, wherein the compound having a modulus of elasticity is selected from the group consisting of stainless steel, titanium carbide, magnesium-partially stabilized zirconia, fused quartz, lead, aluminum alloy, lead and borosilicate glass.

34. The method of claim 28, further including a filler.

35. The method of claim 34, wherein the filler is selected from the group consisting of expanded perlite, brighteners, clay, calcium carbonate, dolomite, sand, barium sulfate, silica, talc, gypsum, wollastonite, calcite, aluminum trihydrate, zinc oxide, zinc sulfate, hollow beads, and mixtures thereof.

36. A coated panel comprising:
a panel having a backing side and an opposing facing side; and
a substantially formaldehyde-free coating layer in communication with the backing side of the panel, the coating layer including a binder comprising a crosslinked grid and a hydrophilic group chemically attached to the crosslinked grid, and a compound having a modulus of elasticity of between about 40 GPa and about 250 GPa.

37. The coated panel of claim 36, wherein the panel is an acoustical panel.

38. The coated panel of claim 36, wherein the panel is substantially sag resistant.

39. The coated panel of claim 36, wherein the crosslinked grid is selected from the group consisting of polyesters saturated and unsaturated, polyurethanes, polycarbonates, alkyds, polyamides, polyacrylates, polymethacrylates, epoxies, dendritic polymers, maleic acid and anhydride polymers and copolymers, ionomers, vinylpyrrolidone polymers and copolymers, poly(vinyl alcohol) polymers and copolymers, polymers and copolymers with hydrophilic grafts, thermosets, carbomer (carbopol) resins and combinations thereof.

40. The coated panel of claim 36, wherein the hydrophilic group is selected from the group including ammonium, quaternary ammonium, amine, amido, saccharide, carboxyl acid, sulfonic acid, hydrolyzed nitrile groups, alcohol functional groups, sulfonic anion, carboxyl anion and combinations thereof.

41. The coated panel of claim 36, wherein the modulus of elasticity of the compound is between about 160 GPa to about 250 GPa.

42. The coated panel of claim 36, wherein the compound having a modulus of elasticity includes mica.

43. The coated panel of claim 36, wherein the compound having a modulus of elasticity is selected from the group consisting of stainless steel, titanium carbide, magnesium-partially stabilized zirconia, fused quartz, lead, aluminum alloy, borosilicate glass, and combinations thereof.

44. The coated panel of claim 36, wherein the coating layer further comprising a filler.

45. The coated panel of claim 44, wherein the filler is selected from the group consisting of expanded perlite, brighteners, clay, calcium carbonate, dolomite, sand, barium sulfate, silica, talc, gypsum, wollastonite, calcite, aluminum trihydrate, zinc oxide, zinc sulfate, hollow beads, and mixtures thereof.

46. A method of coating a panel comprising:
providing a panel having a facing side and an opposing backing side; and
applying to the backing side of the panel a substantially formaldehyde-free coating comprising a crosslinked grid and a hydrophilic group chemically attached to the crosslinked grid and a compound having a modulus of elasticity of between about 40 GPa and about 250 GPa.

47. The method of claim 46, wherein the coating is applied by the method selected from the group consisting of roll coating, spraying, curtain coating, extrusion, knife coating and combinations thereof.

48. The method of claim 46, further including adding components selected from the group consisting of catalysts, fillers, surfactants, buffers, viscosity controllers, pigments, and flattening agents and combinations thereof to the coating.

49. The method of claim 46, wherein the panel is an acoustical panel.

50. The method of claim 46, further comprising curing the coating at a temperature range from about 350°F to 700°F.

51. The method of claim 46, wherein the cure temperature range is between about 370°F to 420°F.

52. The method of claim 46, wherein a solids content of the coating when applied to the backing side is from about 15% to about 80%.

53. The method of claim 52, wherein a solids content is from about 45% to about 55%.

54. The method of claim 46, wherein the crosslinked grid is selected from the group consisting of polyesters saturated and unsaturated, polyurethanes, polycarbonates, alkyds, polyamides, polyacrylates, polymethacrylates, epoxies, dendritic polymers, maleic acid and anhydride polymers and copolymers, ionomers, vinylpyrrolidone polymers and copolymers, poly(vinyl alcohol) polymers and copolymers, polymers and copolymers with hydrophilic grafts, thermosets, carbomer (carbopol) resins and combinations thereof.

55. The method of claim 46, wherein the hydrophilic group is selected from the group including ammonium, quaternary ammonium, amine, amido, saccharide, carboxyl acid, sulfonic acid, hydrolyzed nitrile groups, alcohol functional groups, sulfonic anion, carboxyl anion and combinations thereof.

56. The method of claim 46, wherein the modulus of elasticity of the compound is between about 160 GPa to about 250 GPa.

57. The method of claim 46, wherein the compound having a modulus of elasticity includes mica.

58. The method of claim 46, wherein the compound having a modulus of elasticity is selected from the group consisting of stainless steel, titanium carbide, magnesium-partially stabilized zirconia, fused quartz, lead, aluminum alloy, borosilicate glass, and combinations thereof.

59. The method of claim 46, wherein the coating further comprising a filler selected from the group consisting of expanded perlite, brighteners, clay, calcium carbonate, dolomite, sand, barium sulfate, silica, talc, gypsum, wollastonite, calcite, aluminum trihydrate, zinc oxide, zinc sulfate, hollow beads, and mixtures thereof.

60. A substantially formaldehyde-free coating composition comprising:
a dispersible or soluble binder capable of forming a crosslinkable grid;
a hydrophilic group;
a compound having a modulus of elasticity of between about 40 GPa and about 250 GPa; and
and a liquid carrier.

61. The coating of composition of claim 1, wherein the liquid carrier includes water, an organic solvent, or a combination thereof.
